# EUROPEAN PATENT APPLICATION

(11) **EP 2 906 002 A1**
(43) Date of publication of application: **12.08.2015**
(21) Application number: 14382045.4
(22) Date of filing: 07.02.2014
(51) Int. Cl.: H04W 52/02

(54) **Monitoring system for buried operation**

(71) Applicant: Asociacion para la Investigacion y Desarrollo Industrial de los Recursos Naturales - AITEMIN, 28918 Madrid (ES)
(72) Inventor: Espada Moreno, Francisco José, 28035 Madrid (ES); Rodriguez Lopez, Angel José A., 28003 Madrid (ES)
(74) Representative: Carvajal y Urquijo, Isabel

(57) **Abstract**

A monitoring system to operate buried is disclosed. It comprises a reading unit (2) that transmits and receives high frequency signals wirelessly and a plurality of remote nodes (3, 4) wired to several measuring instruments or sensors (30) that take physical measurements of the surrounding environment. The nodes (3, 4) can transmit and receive high frequency signals wirelessly. In turn, the reading unit (2) can generate and transmit wirelessly an initialization message that contains information on the activation interval. In addition, the nodes (3, 4) can be activated as a function of the interval defined in said initialization message, read the physical measurements made by the sensors (30) during the activation interval and remain in low power consumption mode until the following activation interval.

## Description

### Technical field of invention

The invention belongs to the field of instrumentation systems. It is in particular related to the transmission of data collected by sensors that operate buried.

### Background on the invention or State of the art

There are different fields of industry, such as mining, certain civil works, construction or waste disposal into which the need of buried monitoring instrumentation exists (sensors or elements for the measurement of several parameters: temperature, pressure, humidity, water content, vibration, displacement, etc.). The instruments must be very robust to withstand the operating conditions, of the smallest possible size to minimize the perturbation on the media and durable, as the operation may last for years. In certain circumstances the sensors will operate at long distance, as the distance between the instrumentation and the system for the recording and processing of information could be significant (in the range of tens or hundreds of meters).

The existing commercial solutions used nowadays for these purposes require the use of a cable for the supply of electrical power and/or for the transmission of the signal. This cable, that connects the instrumentation to external devices for the recording of information, is a drawback in a great number of situations, as it obstructs the installation operations, it may result easily damaged during the normal operation in these works (use of heavy machinery) and it is a preferential path for the leakage of both liquid and gaseous fluids. A solution to these problems is the development of wireless instrumentation adapted to the mentioned specific conditions: robust, buried operation, reduced size and long autonomy (equipped with batteries to guarantee the continuous operation for years with no maintenance). In addition, it will ideally have long operating range, for the signal being able to reach the data acquisition and processing system when it is placed at significant distance of the instruments.

Wireless systems are proliferating over the last few years, mostly due to their low cost and power consumption. These systems are not measuring instruments (or sensors) themselves but they are composed of autonomous data acquisition nodes to which at least one conventional or commercial measuring sensor can be connected.

On the other hand, the field of wireless communications is a rapidly expanding one, and there exist already several solutions that may appear very similar to this claim. These solutions can be classified into two groups: those using low or very low frequency waves (ULF, SLF, ELF) and those using high or very high frequency (HF, VHF, UHF or microwaves).

The first group of solutions, based on low frequencies is used for data transmission in buried or confined settings. Although they cover long communication distances (in the range of hundreds of meters), they have major shortcomings. The systems based on low frequencies demand high energy inputs. In consequence, either their autonomy is limited or they require very bulky batteries. In addition, a very important issue is that they require large antennae that would significantly alter the media in which they were installed. These limitations make those solutions not suitable for the demanded field and use.

The second group of solutions, based on high frequencies, has lower power consumption, but the operation range is relatively short (metres to tens of metres). Therefore, they are being applied mainly in open spaces or relatively confined (open galleries or tunnels), but not for their use completely buried. In these conditions (open air or galleries/tunnels), durability is not a key point, as it is possible to perform maintenance activities because the units are accessible. These solutions are not suitable as they can not work completely buried, nor have the durability and autonomy necessary.

Moreover, the nodes of current systems remain always active (relative high power consumption, and transmit information when polled (master/slave sheme), so data are always recorded properly) or they transmit information autonomously without being polled, with fixed intervals and hibernating between transmissions, with low power consumption, but with the possibility of collisions between messages there, with the consequent loss of data.

The invention implements advantageously a communication protocol designed on purpose that has the advantage of low power consumption and also prevents data loss. It is then possible to obtain the required long life performance of the system. Large operating ranges can be achieved by means of a network arrangement with intermediate repeater devices (*quasi-mesh* topology).

### Brief description of the invention

According to the mentioned problems and limitations found in the state of the art, it would be desirable to have a system capable of functioning buried for long periods of time, and through significant thicknesses of solid material.

The invention proposes a system intended to operate buried, which includes several elements. First, it needs a reading unit to transmit and receive high frequency signals wirelessly and several remote nodes. These nodes can be wired to various sensors, which perform the physical measurements in the surrounding environment. These nodes can also transmit and receive wirelessly using high frequency signals. The reading unit generates and transmits an initialization signal with information about an activation interval. According to the interval defined in the initialization message, the nodes are activated and can read their associated sensors for the duration of the activation interval. Afterwards, the nodes remain in low power mode until the following activation interval.

The penetration of high frequency radio waves in rock and soil has proven both in theory and practice to be very low. For this reason, the use of these short wavelength signals was discarded in the past for this purpose. However, the present invention proposes using high frequencies through a combination of several techniques: short-range transmission, combined with advanced power and transmission management that minimizes the consumption and to enable the function of nodes as repeaters. The result of this combination is a system capable of operating buried for long periods of time.

The technical characteristics of the system (construction, configuration and design) allow to specifically meet the functionality required in a wireless instrumentation system based on high frequency transmission able to work buried, being very robust,with small size and long battery life.

The above system has been developed for different transmission frequencies and tested in real conditions of use, which ascertains its suitability to work buried in different media (backfilling of various materials, concrete walls, clays, etc.). It operates buried with different sensors connected to its nodes. The operation ranges (distance nodes-reader) depend on the confining material and its characteristics (mainly water contents and its conductivity). The duration of unattended operation depends on the number of sensors connected, their power consumption and frequency of reading, but durations of years are expected for normal operating conditions in the indicated applications.

### Brief description of the drawings

FIG. 1: Sketch of the different components of the system.
FIG. 2: Block diagram of wireless node.
FIG. 3: Block diagram of reading unit.
FIG. 4: Time schedule
FIG. 5: Time schedule

### Detailed description of the invention

The operation mode detailed with reference to the figures should not be taken as limiting for the scope of the invention.

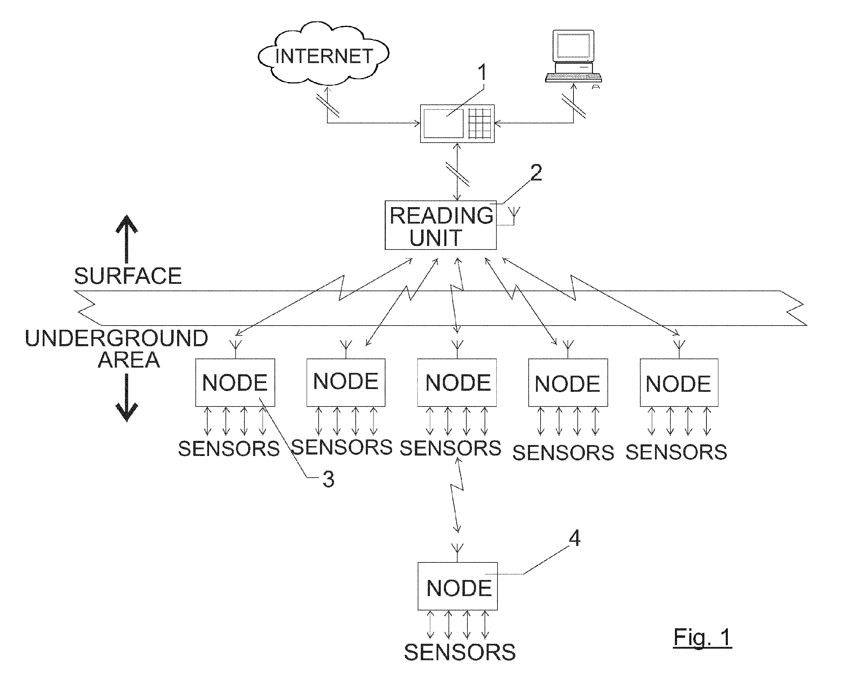

A possible execution of the wireless monitoring system to work buried is shown in FIG. 1. It consists of a series of wireless nodes **3, 4** (generally up to sixteen), to each of which a number of measuring devices the sensors **30** (in general, less than ten) can be connected (with cable). The sensors **30** are in charge of the measurement of several physical magnitudes according to their type. Each sensor is powered by a node **3, 4** to which it is wired. Power boosters **6, 14** are used for supplying power to sensors **30.** A radio transceiver **8** is only activated during short periods of time as a function of an activation schedule.

The measuring signal of sensor **30** is collected by the node **3, 4** by cable. The sensors **30** are in principle located at short distance from the nodes **3, 4** (few metres in general). The nodes **3, 4** communicate by means of wireless transmission with a reading unit **2** common to all of them and located at a certain distance (metres); this element **2** relays the information, by cable, to a central processing unit **1.** This unit is optional and it is dedicated to the filtering of information and data representation, as well as to the integration of **2** with typical elements used in monitoring systems (SCADAs, dataloggers, etc.).

The wireless transmission is performed by means of transceivers **6, 14, 18** in the nodes **3** and in the reading unit **2,** which are radio modules that allow information transmission and reception. For example, in certain applications they can be multichannel narrowband transceivers, tuned in the new ISM European band. These elements can be certified according to standards ETSI EN 300 220-3 and EN 301 489-3, with a nominal maximum power of transmission of 500 mW (equivalent to +27 dBm).

The use of these bi-directional communication devices at nodes **3, 4** or in the reading units **2** allows the configuration of the remote elements of the system (other nodes **3, 4** installed in inaccessible locations) from a remote control point, normally a computer in the control room or even through the Internet. Additionally, the bidirectional communication allows the behaviour of these elements (interval between readings, transmissions, etc.) be modified in real time during operation according to the needs. This feature allows adapting the system to a wider range of applications, as well as a substantial prolongation of its lifespan by optimizing the reading frequency to save energy in the different monitoring phases.

The power source is based on high capacity batteries **15,** long lasting and with small size (high energy density), with ultra-low self discharge.

In order to avoid the excessive power consumption that would occur if nodes **3, 4** remain always active, a communication protocol was implemented. In this protocol, nodes transmit only in intervals set by messages sent from the reading units **2.** The communication protocol is specific and has been developed to reduce the power needs of electronics and communication time and, in consequence, the total consumption of the system. The main characteristic of this protocol is that every time that a data transmission is made the interval to the next transmission is simultaneously set. With the aim of further reducing system's prower consumption, the electronics remain in sleep mode during that interval, until it is necessary to take and transmit a new measurement, after which the system returns to sleep mode during the interval fixed in the last transmission. With this technique, the operating time is extended in at least one order of magnitude. The details of the developed protocol are described at the end of this section. Each node **3** forwards and at the same time stores in non-volatile memory all data from any other nodes **4** it receives (its own data in duplicate manner). Therefore the nodes work both as repeaters and security data storage of those nodes **4** that do not directly reach the reading unit **2.** If the radios eventually stop working, or the signal failed to reach reading unit **2,** data could be recovered when dismantling the experiment or the installation.

The transmission is made in a high frequency range of communication within the VHF and HF bands which allows communication distances on the order of meters when the system works buried in backfilling engineering materials, soils, concrete, clays, etc.

Since the wireless communication distance between nodes **3, 4** and reader **2** is relatively short for what is demanded by certain applications, the communication protocol allows establishing *quasi-mesh* communication networks. Thus, the information obtained in a distant node can be retransmitted from one to another through/by means of various nodes that work also as readers, to reach the reading unit **2** in a remote location and, from there, finally the central unit **1.** In this way, long distances can be overcome with shorter steps. The synchronization between activity intervals of the nodes, so that they can perform their function as repeaters, is an essential feature of the system which allows performing this function without a significant increase of energy consumption.

### Sensing wireless sensor 3, 4

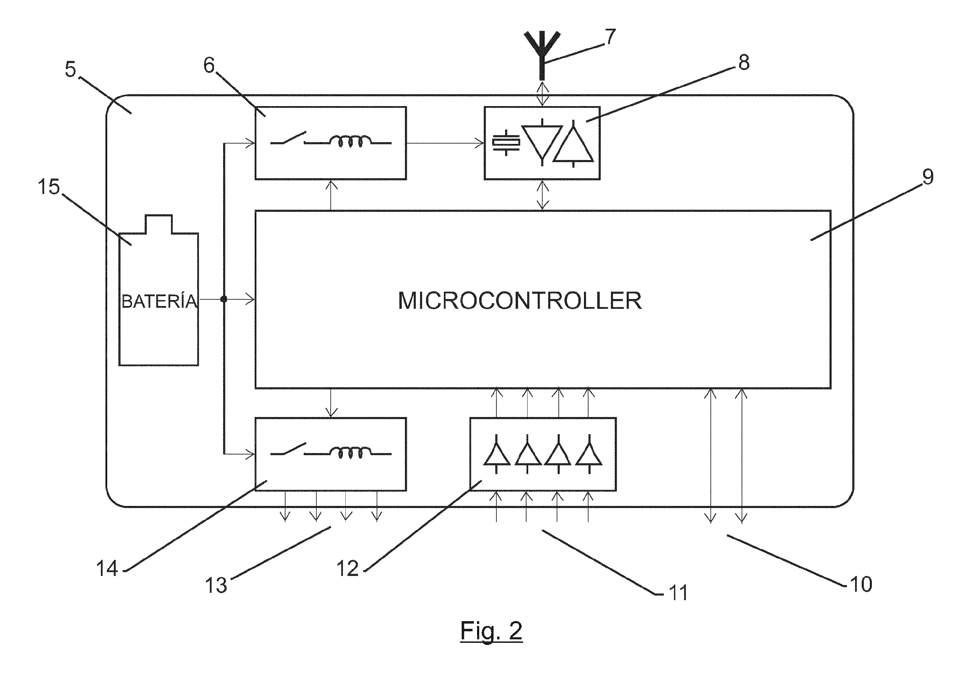

Each of the nodes includes the following principal elements as shown in FIG. 2:
- Wireless communication module **7, 8.**
- 16 bits micro-controller **9,** having ultra-low power consumption with functions of serial communication, analogical-digital data conversion (ADC), real time clock/calendar (RTCC) and integrated *watchdog.*
- Power boosters **6, 14** for supplying power to sensing elements and radio transmission module respectively. These boosters are permanently controlled by the microcontroller core in such a way that they are only activated during very short intervals, strictly those necessary to perform the readings of the sensors and transmitting the data via radio.
- Battery **15:** high energy density, low self-discharge rate, primary Lithium battery.

The outer enclosure of the node is normally based on a box of synthetic material reinforced with high strength fiber, which is able to withstand the high pressures in the operation environments without being damaged. The sensors may be integrated into the enclosure or cabled via glands or a system of watertight pipes (tubing). In the latter case, the enclosure is manufactured in stainless steel of the adequate thickness. The transmitting antenna is fixed to the node by means of a watertight metallic connector that prevents water from entering. The entire set of elements/ensemble have a protection degree of IP68 or higher, and the elements contained by the enclosure can be potted with synthetic waterproog resin.

### Reading unit 2

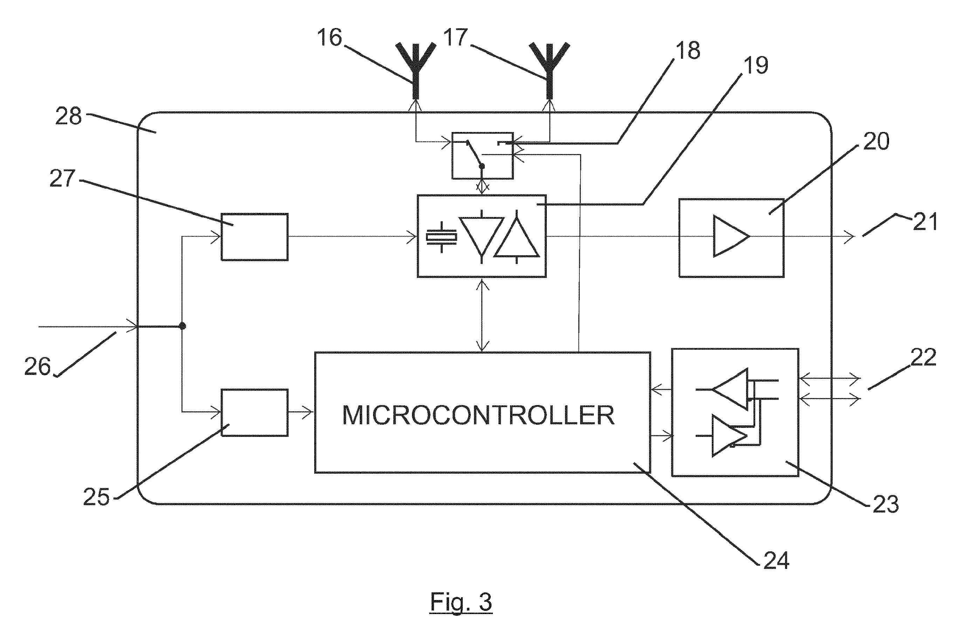

The reading unit **2** has a construction very similar to wireless sensing node **3, 4,** and it consists of the following elements. According to FIG. 3:
- RF switch **18** managed by central unit to allow diversity of antenna **16, 17.**
- Serial differential transceiver **19** for communication with central processing unit **1**.
- Signal conditioning system **27, 20** for RSSI indicator (Received Signal Strength Indicator).
- Power regulator **25** for internal elements (the power is supplied by the central processing unit **1**).

The enclosure and external elements (antenna **16, 17**) are of identical construction to sensing node **3, 4.** However, this element has an additional connector to allow both supplying power and by-wire data transmission to central processing unit **1**.

### Central processing unit (optional) 1

This device provides power to the reading unit **2** and is in charge of reading, filtering and processing all the data it captures. In addition, it can take care of the synchronization and scheduling of transmission periods between different nodes **3** in order to avoid collisions of data frames, management of retries, etc.

Data provided by nodes **3, 4** can be viewed on the integrated display on the unit, and they are also pre-processed and scaled/normalized to allow reading from third parties such as SCADA or similar systems with common use protocols, for example but not limited to, MODBUS or similar protocols. In turn, it allows the connection via Ethernet to local area networks (LAN) and incorporates a web server through which sensor data can be accessed from any Web browser. This feature is also used for diagnosis and general system configuration functions, as network parameters, identification of remote sensing units, etc.., plus setting of the interval between transmissions.

### Communication protocol:

The communication protocol used in the system (consisting of a reading unit 2 and one or more buried nodes **3, 4**) has been optimized to minimize the energy used in each transmission, while ensuring that no data are lost.

This protocol uses a modified method of "time-slot" transmission (transmission in defined time intervals, with no need of interrogation by a master node, or remote reading unit **2**) with external synchronization. A number of time slots of fixed duration are defined, and each node will only transmit in the one assigned to it, in the order and manner indicated below.

To establish the transmission slot of each node **3, 4,** an identifier is assigned; i.e., a different number to each of them. Preferably, these numbers are consecutive. The assignment is made for a given set of nodes. Thus, the nodes are numbered from 1 to N, with N the maximum number of nodes. The usual practice is that the nodes with the lowest number are those closer to the reading unit **2** and the node with the highest number is the most distant.

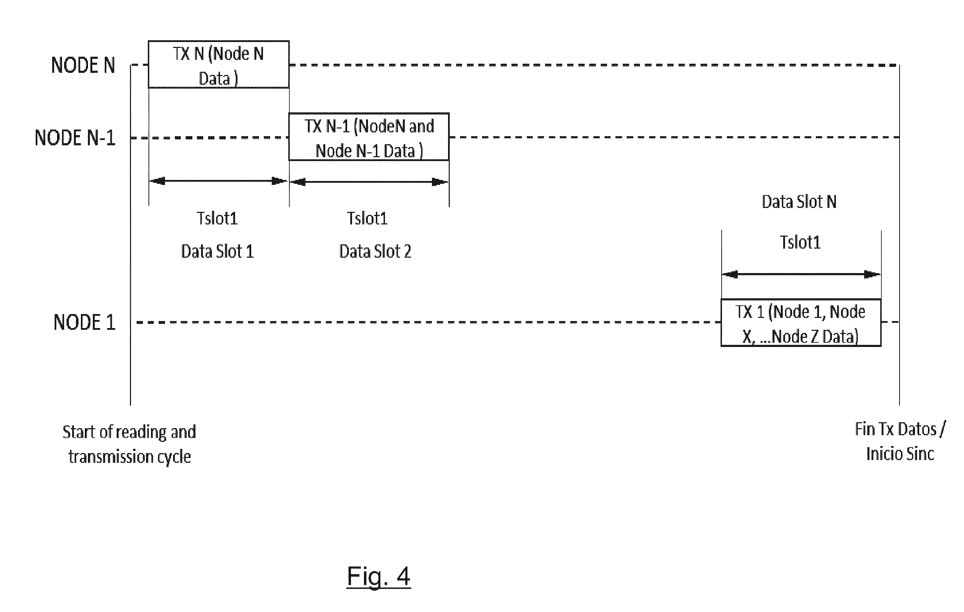

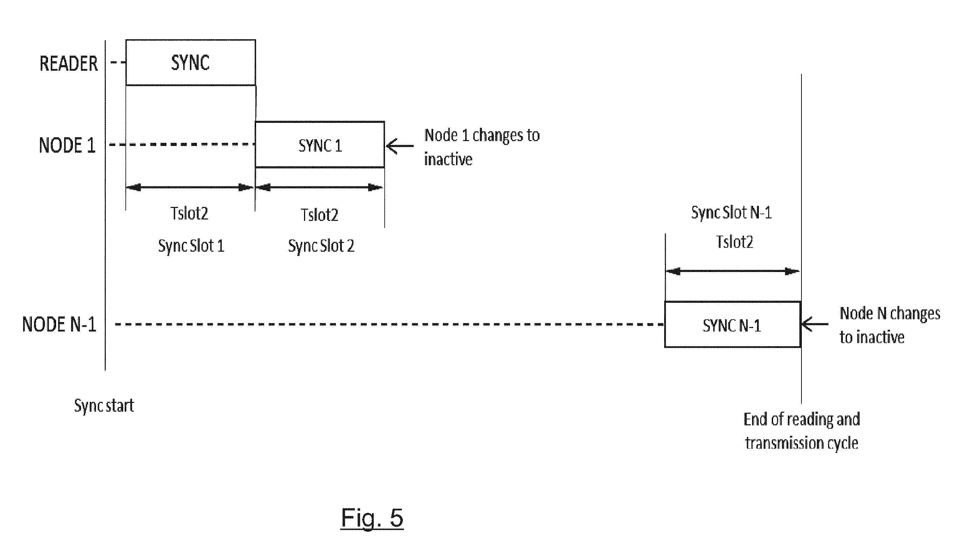

Two stages are identified in the communication process. An initialisation stage, which occurs when a node **3, 4** is activated for the first time, and normal operation. FIG. 4 and in FIG. 5 show an example of a time schedule where each node has been assigned a time slot within the activation interval, during which it can transmit. The sequence of events for each component of the system is the following:
1.- Initialisation phase
   a) When a node **3, 4** is powered for the first time, it remains listening, waiting for a synchronization message from the reading unit **2.** This message comprises the current time and the transmission time interval, w can vary from few minutes to several hours.
   b) Once this message has been received, node **3, 4** auto-programs the start of the next cycle of activity and enters sleep mode, remaining in low power consumption mode.
   c) The start of the next cycle is set for a time that is the first integer multiple of the transmission interval subsequent to the current time. For example, if an interval of 1 hour is set, and the current time were 11:58:37 h, the start of the next transmission cycle would be at 12:00:00 h, and if the current time were 12:01:11 h, the start of the next cycle would occur at 13:00:00 h. If the interval were fixed in 5 minutes, transmissions would occur at 12:00:00 h and 12:05:00 h respectively.
2.- Normal operation
   a) According to what was indicated above, nodes **3, 4** are activated at scheduled times, and they take a measurement of the sensors **30** connected to them, storing the data in a file in the nonvolatile memory card they have incorporated.
   b) If the battery level is low, the node **3, 4** returns immediately to low consumption state.
   c) If the battery level is high enough, the node begins to measure the elapsed time from activation, and remains listening to possible transmissions from other nodes **3, 4.**
   d) If any transmission from other node(s) is received, it is stored in an internal buffer.
   e) A reverse order will be followed in the transmissions: the first node to transmit will be that with the highest number, and in the following time slot the node with the number immediately below will transmit, and so on until node number 1. Each node transmits its own data, along with data from any other node that it may have received previously. (Note: The duration of Tslot1 transmission slot is set-depending on the time required to transmit the longest possible message).
   f) The node enters a state of listening to transmissions, storing any received data in an internal buffer.
   g) After a time equal to Tslot x Nmaxnodes the transmissions will be completed. At this time all data, both own data and data received from other nodes, are saved to another file in the embedded nonvolatile memory card, remaining all nodes active and listening.
   h) At this moment a re-synchronization sequence is started by the reader, which transmits a message with current time and the time to the next reading event.
   i) The nodes will remain listening until the message with their next transmission time arrives, storing the new current time in their internal real time clock as well as the transmission interval in case any re-scheduling message is received.
   j) In the synchronization sequence the slots may have a different duration from that during the data transmission phase (Tslot2).
   k) For the re-synchronization, direct transmission order will be followed: the first to transmit will be the node with the lowest number, in the following slot the immediately superior node will transmit and successively up to node number N-1 (the last node does not re-transmit).
   l) Each node, to perform the re-transmission of the re-synchronization message to the nodes, will use the date and time of its internal clock, to compensate transmission latency/delays and maintain a perfect synchronization.
   m) Once the re-transmission has been performed, the node auto-programs the start of the next activity cycle and turns off, setting itself into low power consumption mode, ending then the communication cycle for this node.
   n) In the event that a node does not receive the re-synchronization message after the preset interval, it will retain the value of its real-time clock and the value of the transmission interval. In that moment, the node auto-programs the start of the next activity cycle and turns off, setting itself into low power consumption mode, ending then the cycle of communication for this node.

Note: It is possible that this node -if the transmission interval has been changed- transmits at a different time than the rest of nodes, but in any case, the method ensures that transmissions do not overlap.

Numbered elements:
1- Central unit
2- Reading unit
3- Node (placed in direct radio connection)
4- Node (placed in secondary radio connection)
5- Cover made of high resistance synthetic material
6- High efficiency switching booster (5v)
7- Omni directional antenna
8- Radio transceiver stage
9- Microcontroller
10-Connection/plug for digital sensors (x2)
11-Input signal analogical sensors (x4)
12-Signal conditioner for analogical sensors
13-Output power for analogical sensors (x4)
14-High efficiency switching booster (configurable voltage)
15- Power battery
16- First omni directional antenna
17-Second omni directional antenna
18- Radio switch
19- Radio transceiver stage
20- Impedance adapter amplifier
21-Indicator of received signal power
22-Differential serial communication
23- Differential serial transceiver
24- Microcontroller
25- Linear voltage regulator
26- Input power
27- Linear voltage regulator
28- High resistance plastic cover
30- Sensors

## Claims

1. A monitoring system to operate buried that comprises:
- a reading unit (2) configured to transmit and receive high frequency signals wirelessly,
- a plurality of remote nodes (3, 4) wired to several measuring instruments or sensors (30) that take physical measurements of the surrounding environment; the nodes (3, 4) are configured to transmit and receive high frequency signals wirelessly,
**characterized in that**
- the reading unit (2) is configured to generate and transmit wirelessly an initialization message that contains information on the activation interval,
- the nodes (3, 4) are configured to be activated as a function of the interval defined in the initialization message, read the physical measurements made by the sensors (30) during the activation interval and remain in low power consumption mode until the following activation interval.

2. The system, according to claim 1, wherein the reading unit (2) is configured to allocate a node identifier to the nodes (3, 4) and where nodes (3, 4) are configured to use a slot in the subsequent activation interval during which they will transmit in order.

3. The system, according to claim 1 or 2, wherein the nodes (3, 4) are inter connectable, so that a first node (3) is also configured to receive the information from a second node (4) during the activation interval.

4. The system, according to any of the previous claims, further comprising a central unit (1) configured to communicate with reading unit (2).

5. The system, according to any of the previous claims, wherein the reading unit (2) is configured to transmit and receive with MIMO diversity.

6. The system, according to claim 5, wherein the reading unit (2) comprises a radio switch (18), a radio transceiver (19) and two antennae (16, 17).

7. The system, according to any of the previous claims, wherein the node (3, 4) comprises a micro controller (9).

8. The system, according to any of the previous claims, wherein the node (3, 4) is connectable to a variety of analogical sensors (30) and comprises a signal conditioner (12), power output (13) and a memory card to store the data.

9. The system, according to any of the previous claims, wherein the node (3, 4) comprises/includes a signal conditioner (12) and power output (13) to supply the sensors (30) connected to that node (3, 4).

10. The system, according to any of the previous claims, wherein the high frequency wireless signals belong to VHF band.

11. The system, according to any of claims 1 to 9, wherein the high frequency wireless signals belong to HF band.
